# EUROPÄISCHE PATENTSCHRIFT

(11) **EP 1 002 973 B1**
(45) Veröffentlichungstag und Bekanntmachung des Hinweises auf die Patenterteilung: **29.12.2004**
(21) Anmeldenummer: 99121061.8
(22) Anmeldetag: 21.10.1999
(51) Int. Cl.: F16J 15/12

(54) **Plattenförmige dauerelastische Hochtemperatur-Dichtung, insbesondere für Abgasanlagen von Verbrennungsmotoren**
Heat-resistant flat gasket, in particular for exhaust systems of combustion engines
Joint plat résistant aux hautes températures, en particulier pour dispositifs d'échappement de moteurs à combustion

(30) Priorität: 19.11.1998 DE 19853472
(43) Veröffentlichungstag der Anmeldung: 24.05.2000
(73) Patentinhaber: Burgmann Industries GmbH & Co. KG, 82515 Wolfratshausen (DE)
(72) Erfinder: Hartling, Peter, 82538 Geretsried (DE); Brenndörfer, Reinhard, 82538 Geretsried (DE); Eskelinen, Reino, 83646 Wackersberg (DE); Irmler, Josef, 82541 Münsing (DE); Bohatsch, Stefan, 82549 Königsdorf (DE); Meincke, Michael, 82515 Wolfratshausen (DE)
(74) Vertreter: Geyer, Werner, Dr.-Ing.

(56) Entgegenhaltungen:
- DE-U- 8 706 334
- US-A- 2 330 106
- US-A- 4 463 959
- US-A- 4 795 166
- US-A- 5 683 092
- PATENT ABSTRACTS OF JAPAN vol. 010, no. 077 (M-464), 26. März 1986 (1986-03-26) & JP 60 220265 A (ASAHI ISHIWATA KOGYO KK), 2. November 1985 (1985-11-02)

## Beschreibung

Die Erfindung bezieht sich auf eine plattenförmige, dauerelastische Hochtemperatur-Dichtung, Insbesondere für Abgasanlagen von Verbrennungsmotoren, die mindestens eine Öffnung umschließt.

Zur Verwendung bei Abgasanlagen von Verbrennungsmotoren sind plattenförmige, dauerelastische Hochtemperatur-Dichtungen bekannt, die entweder als Graphitdichtungen oder als Glimmerdichtungen oder als Metalldichtungen ausgeführt sind und in denen mindestens eine Öffnung für den Durchtritt der im Abgassystem abströmenden Verbrennungsgase vorgesehen ist.

Graphitdichtungen zeichnen sich dabei dadurch aus, daß sie über ein gutes Rückfederverhalten und damit über eine gute Dauerelastizität verfügen. Infolge ihrer "weichen" Konsistenz kann sich die Oberfläche von Graphitdichtungen sehr gut an die Oberflächenrauhigkeiten der Metallflansche, an denen die Dichtung eingesetzt wird, anpassen. Solche Dichtungen haben allerdings den Nachteil einer relativ niedrigen Temperaturbeständigkeit, da Graphit ungeschützt nur bis zu etwa 450°C einsetzbar ist, ohne daß ein Masseverlust durch Oxidation eintritt. Da die laufend verschärften gesetzlichen Vorschriften über die Emissionen von Kraftfahrzeugen jedoch immer genauer arbeitende Regelsysteme für die eingesetzten Verbrennungsmotoren erfordern, ergibt sich als Folge dieser Entwicklungen, daß die Überwachungssysteme (λ-Sonde) zunehmend auch hinter dem Katalysator eingesetzt werden müssen. Die Werte für die zulässige Leckage der gesamten Abgasanlage werden dabei stark reduziert. Hierdurch steigen die Anforderungen an die Dichtungen im Bereich der Abgasanlagen ganz erheblich, wobei die herkömmlich eingesetzten Dichtungen die geforderten Leckagewerte nicht mehr erfüllen können. Die dabei auftretenden Flanschtemperaturen im Einsatzbereich solcher Dichtungen liegen in einem Bereich zwischen etwa 500°C und 700°C, so daß die bekannten reinen Graphitdichtungen infolge Zerstörung durch Oxidation hier nicht mehr einsetzbar sind.

Glimmerdichtungen eignen sich zwar sehr gut für einen Einsatz im Hochtemperaturbereich, wobei sich unter der Einwirkung hoher Temperaturen (etwa im Bereich > 600°C) das Material aufbläht und die Dichtwirkung dadurch verbessert wird. Allerdings werden im kalten Zustand vor dem ersten Aufheizen die heute geforderten Leckagewerte mit solchen Dichtungen nicht erreicht; die Dichtheit der Glimmerdichtung verbessert sich erst nach dem Aufheizen in der erforderlichen Weise. Das Rückfederverhalten der Glimmerdichtungen ist gering und reicht speziell nicht aus, um auftretende Verzüge an den Flanschen im Abgasbereich so auszugleichen, daß die geforderte Dichtwirkung erreicht wird.

Die ebenfalls bekannten Metalldichtungen sind zwar hinsichtlich der Temperatur für den Einsatz in Abgasanlagen von Kraftfahrzeugen gut geeignet, jedoch wird ihre Dichtwirkung durch zwei Faktoren eingeschränkt. Da die Anpassungsfähigkeit von Metalldichtungen an rauhe Oberflächen ziemlich schlecht und mit der von Graphit überhaupt nicht und auch mit der von Glimmer nicht vergleichbar ist, ist es erforderlich, bei der Verwendung von Metalldichtungen die Flanschoberflächen Im Abgasbereich zu bearbeiten, um deren Oberflächenrauhigkeit extrem gering zu halten. Es ist femer für eine gute Rückfederung bei Metalldichtungen notwendig, diese als Sickendichtungen auszubilden. Bei solchen Ausführungsformen der Metalldichtungen handelt es sich allerdings um Liniendichtungen, die durch unebene Verzüge der Flansche und die damit verbundene ungleichmäßige Belastung eine verschlechterte Dichtwirkung zeigen. Außerdem sind solche Liniendichtungen bei komplexen Flanschgeometrien nur sehr bedingt herstellbar. Auch verschlechtert sich das Rückfederverhalten der Metalldichtungen bei höheren Temperaturen. US 5 683 092 offenbart eine bekannte Dichtung, gemäß dem Oberbegriff des Hauptanspruchs.

Ausgehend hiervon liegt der Erfindung die Aufgabe zugrunde, eine plattenförmige Hochtemperatur-Dichtung zur Verfügung zu stellen, die im Sinne einer guten Dauerelastizität über eine gute, dauerhafte Rückfederung verfügt, einfach und vergleichsweise kostengünstig herstellbar ist und dennoch die gewünschten Dichtungswirkungen und Leckagewerte auch über lange Zeit gewährleistet.

Erfindungsgemäße wird dies durch eine plattenförmige dauerelastische Hochtemperatur-Dichtung erreicht, die mindestens eine Öffnung umschließt, wobei sie aus einer Deckschicht, einer Bodenschicht und einer zwischen beiden angeordneten Mittelschicht besteht und die Deckschicht sowie die Bodenschicht aus einem ganz oder zumindest überwiegend aus Glimmer bestehenden Material gebildet ist, während die Mittelschicht einen Metallträger umfaßt, wobei der nicht von diesem Metallträger eingenommene Raum der Mittelschicht ganz oder im wesentlichen mit Graphit ausgefüllt ist.

Die erfindungsgemäße Dichtung ist eine neuartige Flächendichtung, die die gute Rückfederung des Graphits mit der hohen Temperaturbeständigkeit des Glimmers in vorzüglicher Weise verbindet. Ihr Aufbau besteht im wesentlichen aus einer Graphitinnenlage (Mittelschicht), die von zwei Deckschichten (nämlich Bodenschicht und Deckschicht) aus Glimmer beidseits abgedeckt wird.

Die vorteilhafte Wirkung der erfindungsgemäßen Dichtung ist zum einen darauf zurückzuführen, daß die Graphit-Mittelschicht durch die sie auf beiden Seiten bedeckenden Schichten aus Glimmer, der über eine Wärmeleitfähigkeit von etwa 0,3 W/m° K verfügt, gegen die hohen Flanschtemperaturen abgeschirmt wird und außerdem der Glimmer die Zufuhr von Sauerstoff an den Graphit verhindert. Bei diesem speziellen bei der erfindungsgemäßen Dichtung gegebenen Aufbau ist der Graphit auch unter hohen Temperaturen (bis etwa 3000°C) einsetzbar und behält gleichzeitig sein langzeitstabiles Kompressions- und Rückfederungsverhalten, so daß eine auch über lange Zeit hinweg wirklich dauerelastische Hochtemperatur-Dichtung geschaffen ist. Gleichzeitig gewährleistet dieses vorzügliche Rückfederungsverhalten, daß auch unebene Flanschverzüge an den Befestigungsflanschen ohne Schwierigkeit gut ausgeglichen werden können. Der Glimmer besitzt zudem eine hervorragende Anpassungsfähigkeit an rauhe Oberflächen, wodurch eine besondere Bearbeitung der Flanschflächen nicht notwendig ist. Alle diese Vorteile, die sich nur durch die erfindungsgemäße Ausgestaltung der Dichtung gemeinsam erreichen lassen, gewährleisten, daß die hohen Anforderungen an die Dichtheit in Abgasanlagen auch unter den neuesten gesetzlichen Vorschriften ohne weiteres erfüllt werden können.

Die erfindungsgemäße Dichtung ist zudem relativ einfach herstellbar, was auch für komplexe Geometrien der Dichtungsform gilt.

In einer besonders bevorzugten Ausgestaltung der Erfindung weist die erfindungsgemäße Hochtemperatur-Dichtung an ihrem Außenrand und/oder am Außenrand jeder Öffnung, die in der plattenförmigen Dichtung ausgebildet ist, einen umlaufenden metallischen Bördelring auf, der, erneut bevorzugt, an seinen beiden axialen Enden mit einem radial überstehenden Bördelrand versehen ist. Besonders bevorzugt ist dabei der Bördelring in dem Abschnitt, der zwischen seinen beiden axialen Enden verläuft, im Querschnitt gewölbt ausgebildet.

Durch die Verwendung solcher Bördelringe an den Außenkanten der erfindungsgemäßen Dichtung wird sichergestellt, daß dort, wo solche Bördelringe eingesetzt sind, eine vollständige Kammerung des Graphits in der Mittelschicht nach außen hin erreicht werden kann (nämlich auf der Ober- und der Unterseite der Dichtung durch die dort angebrachten Glimmerschichten und an den entsprechenden Endkanten durch die vorgesehenen Bördelringe), wodurch der Graphit in der Mittelschicht hervorragend gegen jegliche äußere Einflüsse, insbesondere auch gegenüber dem Gasstrom in der Abgasleitung, der durch die Öffnung(en) hindurchtritt, und gegenüber den hohen Temperaturen der Befestigungsflansche geschützt ist.

Durch die bei der erfindungsgemäßen Dichtung eingesetzte erfindungsgemäße Kombination von Glimmerschichten mit einer Graphitmittelschicht, wobei der Glimmer für den Graphit gleiäzeitig als Schutz vor Temperatur und gegen Sauerstoff eingesetzt wird, in Verbindung mit der großen Anpassungsfähigkeit des Glimmers an die Unebenheiten der metallischen Flansche sowie in Verbindung mit der dauerelastischen Eigenschaft des Graphits als Werkstoff mit nahezu konstanten physikalischen Eigenschaften, der Ober ein langzeitstabiles Kompressionsund Rückfederungsverhalten verfügt, wird insgesamt, verglichen mit den bekannten Dichtungen, eine vorzügliche Rückfederung verbunden mit einer sehr guten Temperaturbeständigkeit, ferner eine hervorragende Anpassungsfähigkeit an Unebenheiten auf der Oberfläche der Befestigungsflansche erreicht, und dies alles bei einem vergleichsweise einfachen Aufbau, der eine gleichermaßen einfache Herstellung selbst komplizierter Geometrien für die Dichtung zuläßt. Bei der erfindungsgemäßen Hochtemperatur-Dichtung handelt es sich um eine klassische Flachdichtung, also nicht um eine Liniendichtung, wobei durch die Einlagerung des Metallträgers in der Graphitschicht, bevorzugt in Form eines Spießbleches oder einer metallischen Geflechteinlage, eine gute Stabilität für die Graphit-Mittelschicht erreicht wird.

Für die Ausbildung der Deck- und der Bodenschicht wird als Glimmerwerkstoff bevorzugt ein Kalium-Magnesium-Aluminium-Hydrosilikat eingesetzt, das vorteilhafterweise in Form eines mit einem geeigneten Bindemittel imprägnierten "Glimmerpapieres" verwendet wird. Ein solches "Glimmerpapier" ist die Bezeichnung für eine ganz dünne, in Papierdicke hergestellte Glimmerschicht, die meist mit einem geeigneten Bindemittel imprägniert wird, wobei - besonders bevorzugt - als Bindemittel ein Silikonharz verwendet wird.

Die Befestigung der Deck- und der Bodenschicht mit der Mittelschicht kann bei der erfindungsgemäßen Dichtung auf jede geeignete Weise erfolgen, besonders bevorzugt jedoch entweder durch Verkleben oder dadurch, daß der in der Mittelschicht angebrachte Metallträger beidseits etwas über die Mittelschicht hinaussteht, dadurch in die Deck- und in die Bodenschicht hineinragt und somit direkt als Halterungselement zum Zusammenhalten der drei Schichten dient.

Die erfindungsgemäße Dichtung kann sowohl als Krafthauptschlußdichtung, wie auch als eine Kraftnebenschlußdichtung ausgeführt sein, wobei in letzterer, besonders bevorzugt, in einem außen umlaufenden Randbereich der Dichtung in der Mittelschicht ein geeignetes Kraftaufnehmerblech angebracht ist. In dieser Ausgestaltung dient das Kraftaufnehmerblech gleichzeitig auch zur Kammerung der neben ihm angeordneten Graphitschicht (mit eingelagertem Metallträger) zur Außenseite der Dichtung hin und dient gleichzeitig als Kraftübertragungsglied innerhalb der plattenförmigen Dichtung.

Die Erfindung wird nachfolgend anhand der Zeichnung im Prinzip beispielshalber noch näher erläutert. Es zeigen:
- Fig. 1: eine Draufsicht auf ein Ausführungsbeispiel einer erfindungsgemäßen plattenförmigen Hochtemperatur-Dichtung zum Einsatz im Abgassystem eines Verbrennungsmotors, wobei die Dichtung zwei Durchlaßöffnungen umschließt;
- Fig. 2: den (vergrößerten) Schnitt gemäß II-II in Fig. 1;
- Fig. 3: die Schnittdarstellung aus Fig. 2, jedoch in einer geänderten Ausführungsform, und
- Fig. 4: die Schnittdarstellung aus Fig. 2, jedoch für eine wieder andere Ausführungsform der erfindungsgemäßen Dichtung (ohne Bördelring).

In den Figurendarstellungen werden, auch wenn unterschiedliche Ausführungsformen einer Dichtung gezeigt werden, gleiche Bezugszeichen für gleiche bzw. in ihrer Funktion gleich wirkende Elemente der Dichtung benutzt.

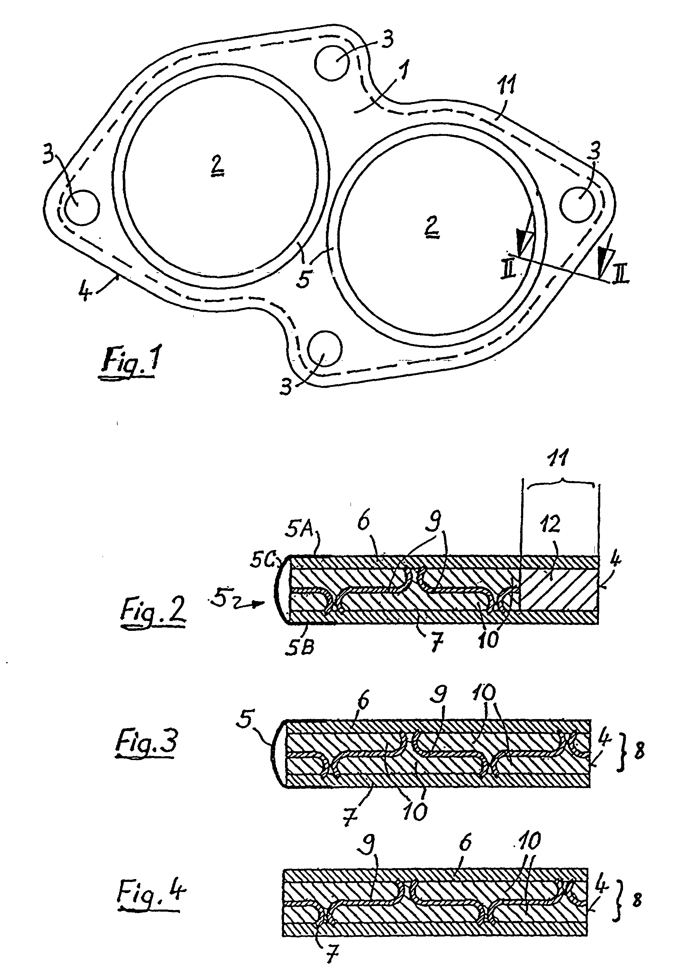

Die in Fig. 1 in Draufsicht dargestellte plattenförmige Hochtemperatur-Dichtung 1 dient zum Einsatz im Abgassystem eines Kraftfahrzeuges mit zwei Abgasrohren, für deren jedes eine Öffnung 2 in der Dichtung 1 vorgesehen ist.

Die Dichtung 1 ist als eine flächige Dichtung mit der speziell in Fig. 1 gezeigten geometrischen Form ausgebildet, wobei in der Dichtung vier weitere Öffnungen 3 zum Hindurchstecken von Befestigungsschrauben angebracht sind, über die zwei Flansche, zwischen denen die Dichtung 1 sitzt, gegeneinander verspannt werden können.

Die Dichtung 1 weist an ihrer Außenseite einen umlaufenden Außenrand 4 auf und ist am Begrenzungsrand der beiden Öffnungen 2 jeweils mit einem umlaufenden metallischen Bördelring 5 versehen.

Die Darstellung der Fig. 2 zeigt einen Schnitt durch die Dichtung längs Schnittlinie II-II aus Fig. 1. Aus diesem Schnitt ist zunächst entnehmbar, daß der Bördelring 5, der den Rand der Öffnung 2 einfaßt, in seinem axialen Abschnitt 5C, der zwischen den beiden axialen Enden des Bördelringes 5 liegt, in Richtung auf das Innere der Öffnung 2 hin gewölbt ausgeführt ist, wobei in der gezeigten Ausführungsform die Wölbung des Abschnitts 5C eine kreisförmige Rundung aufweist. An jedem axialen Ende ist der Bördelring 5, wie ebenfalls aus Fig. 2 entnommen werden kann, jeweils mit einem radial ausgerichtelen Bördelrand 5A bzw. 5B versehen, deren jeder auf der dort jeweils vorliegenden Abschlußfläche der Dichtung 1 anliegt bzw. in diese mit seiner Außenfläche fluchtend eingelassen ist.

Wie ebenfalls der Fig. 2 entnommen werden kann, weist die Dichtung 1 einen Aufbau aus drei Schichten auf:

Zwischen einer Deckschicht 6 und einer Bodenschicht 7 ist eine Zwischenschicht 8 angeordnet.

Die Deckschicht 6 und die Bodenschicht 7 bestehen aus Glimmer, im gezeigten Ausführungsbeispiel aus einem mit Bindemittel getränkten Glimmerpapier, während die Mittelschicht 8 einen Metallträger 9 in Form eines Spießbleches aufweist, wobei alle restlichen Volumina der Mittelschicht 8, die nicht von dem Metallträger 9 besetzt werden, mit Graphit 10 ausgefüllt sind.

Der metallische Träger 9 kann anstelle des gezeigten Spießbleches aber auch in anderer, geeigneter Ausführung vorgesehen werden, z.B. in Form von geeigneten metallischen Geflechteinlagen (die in der Zeichnung nicht dargestellt sind).

Wie Fig. 2 ferner zeigt, ist in einem Randbereich 11 (vgl. auch Fig. 1), der entlang dem Außenrand 4 der Dichtung 1 verläuft, im Bereich der Mittelschicht 8 ein umlaufendes Kraftaufnehmerblech 12 angeordnet (in Fig. 1 gestrichelt eingezeichnet), das, wie aus Fig. 2 entnehmbar, den Graphit aus der Mittelschicht 8 zum Außenrand der Dichtung 1 hin abschließt. Die Mittelschicht 8 ist auf ihrer anderen Seite, nämlich im Bereich des umlaufenden Randes der Öffnungen 2, mittels des Bördelringes 5 abgeschlossen, so daß der in der Mittelschicht 8 enthaltene Graphit 10 sowohl über die aus Glimmer bestehende Deckschicht 6 und die Bodenschicht 7, wie auch seitlich über das Kraftaufnehmerblech 12 und den Bördelring 5 vollständig nach außen hin gekammert ist, so daß weder durch die Öffnungen 2 die heißen Verbrennungsgase, noch auf der Außenseite längs des Außenrandes 4 Sauerstoff oder sonstige Umgebungseinflüsse zu dem Graphit in der Mittelschicht 8 gelangen können. Der Graphit wird durch den Glimmer der Deckschicht 6 und der Bodenschicht 7 auch gegenüber den heißen Befestigungsflanschen (in der Zeichnung nicht gezeigt) hervorragend geschützt.

In Fig. 3 ist, analog der Schnittdarstellung in Fig. 2, eine etwas andere Ausführungsform für den Dichtungsaufbau gezeigt. Bei dieser Ausführungsform wird kein Kraftaufnehmerblech eingesetzt, so daß die Dichtung hier in Form einer Krafthauptschlußvariante ausgeführt ist, bei der also die auftretenden Kräfte direkt über den Dichtungsaufbau selbst und nicht über ein zusätzlich eingelagertes Kraftaufnehmerblech übertragen werden.

In Fig. 4 ist, in analoger Darstellung zu den Schnittbildem aus den Fig. 2 und 3, eine weitere Variante eines solchen Dichtungsaufbaus dargestellt, die sich von dem Aufbau aus Fig. 3 nur dadurch unterscheidet, daß hier kein Bördelring mehr vorgesehen ist. Während die Verwendung eines Bördelringes 5 zu einer Verbesserung der Querschnittsdichtheit der Dichtung ebenso wie zur Abschirmung von Einflüssen aus den heißen Abgasen auf die Mittelschicht 8 beiträgt und deshalb in aller Regel bevorzugt sein wird, kann es auch einzelne Anwendungsfälle geben, bei denen die Verwendung eines Bördelrings nicht unbedingt erforderlich ist, insbesondere auch dann, wenn die Temperatur der auftretenden Abgase nicht so hoch ist, daß im Hinblick auf die Beeinflussung des Graphits in der Mittelschicht die Verwendung eines Bördelrings unabdingbar ist.

Der Metallträger 9, der in der Mittelschicht 8 angebracht und bei den gezeigten Ausführungsbeispielen in Form eines Spießbleches ausgebildet ist, ist so innerhalb der Mittelschicht 8 angeordnet, daß die nach außen gewölbten spitzen Enden der Spießblechform jeweils aus der Mittelschicht 8 heraus sowohl in die Deckschicht 6, wie auch in die Bodenschicht 7 hineinragen, wie dies in den Fig. 2 bis 4 dargestellt ist. Dadurch dient hier der Metallträger 9 gleichzeitig auch als Befestigungselement zur Befestigung der drei Schichten 6, 7 und 8 aneinander und bringt daher im Prinzip die erforderliche Stabilität nicht nur für den Graphit in der Mittelschicht 8, sondern auch für den Zusammenhalt der drei Schichten aneinander.

Es besteht ohne weiteres aber auch die Möglichkeit, die Deckschicht 6 und die Bodenschicht 7 an der Mittelschicht 8 durch eine geeignete Klebung zu befestigen, wobei eine solche Klebung gegebenenfalls auch noch zusätzlich zu der in den Figuren dargestellten Verhakung des Metallträgers 9 auch in der Deckschicht 6 und der Bodenschicht 7 eingesetzt werden kann, wenn dies gewünscht wird.

Als Glimmer für die Deckschicht 6 und die Bodenschicht 7 kann im Prinzip jeder geeignete Glimmer eingesetzt werden. Bevorzugt wird als Glimmer ein Kalium-Magnesium-Aluminium-Hydrosilikat eingesetzt, das besonders bevorzugt in einer ganz dünnen Schicht ("Glimmerpapier") ausgewalzt und mit einem geeigneten Bindemittel imprägniert ist und gegebenenfalls auch in mehreren solchen Glimmerpapier-Schichten übereinander zur Ausbildung der Deck- und der Bodenschicht 6 bzw. 7 eingesetzt werden kann. Als Bindemittel eignet sich ganz besonders Silikonharz.

## Patentansprüche

1. Plattenförmige dauerelastische Hochtemperatur-Dichtung, insbesondere für Abgasanlagen von Verbrennungsmotoren, mit mindestens einer Öffnung (2), wobei die Dichtung (1) aus einer Deckschicht (6), einer Bodenschicht (7) und einer zwischen beiden angeordneten Mittelschicht (8) besteht, in die ein Metallträger (9) eingelagert ist, wobei der von diesem nicht eingenommene Raum der Mittelschicht (8) ganz oder im wesentlichen mit Graphit (10) ausgefüllt ist, ***dadurch gekennzeichnet,* daß** das Material von Deckschicht (6) und Bodenschicht (7) ganz oder zumindest überwiegend aus Glimmer besteht.

2. Plattenförmige Hochtemperatur-Dichtung nach Anspruch 1, die an ihrem Außenrand (4) und/oder am Außenrand der mindestens einen Öffnung (2) einen umlaufenden metallischen Bördelring (5) aufweist.

3. Plattenförmige Hochtemperatur-Dichtung nach Anspruch 2, bei welcher der Bördelring (5) an seinen beiden axialen Enden mit einem radial gerichteten Bördelrand (5A, 5B) versehen ist.

4. Plattenförmige Hochtemperatur-Dichtung nach Anspruch 3, bei welcher der Abschnitt (5C) des Bördelringes (5) zwischen dessen beiden axialen Enden im Querschnitt gewölbt verläuft.

5. Plattenförmige Hochtemperatur-Dichtung nach einem der Ansprüche 1 bis 4, bei der die Deck- (6) und/oder die Bodenschicht (7) aus mit Bindemittel imprägniertem Glimmerpapier besteht.

6. Plattenförmige Hochtemperatur-Dichtung nach einem der Ansprüche 1 bis 5, bei der als Glimmer ein Kalium-Magnesium-Aluminium-Hydrosilikat eingesetzt ist.

7. Plattenförmige Hochtemperatur-Dichtung nach Anspruch 5 oder Anspruch 5 in Verbindung mit Anspruch 6, bei der als Bindemittel Silikonharz eingesetzt ist.

8. Plattenförmige Hochtemperatur-Dichtung nach einem der Ansprüche 1 bis 7, bei der die Deck- (6) und die Bodenschicht (7) mit der Mittelschicht (8) durch Verkleben verbunden ist.

9. Plattenförmige Hochtemperatur-Dichtung nach einem der Ansprüche 1 bis 7, bei der die Deck- (6) und die Bodenschicht (7) mit der Mittelschicht (8) über den in letzterer eingelagerten Metallträger (9) verbunden sind.

10. Plattenförmige Hochtemperatur-Dichtung nach einem der Ansprüche 1 bis 9, bei welcher der Metallträger in der Mittelschicht (8) aus einem Spießblech (9) oder aus einer metallischen Geflechteinlage besteht.

11. Plattenförmige Hochtemperatur-Dichtung nach einem der Ansprüche 1 bis 10, bei der in einem außen umlaufenden Randbereich (11) der Dichtung (1) in der Mittelschicht (8) ein Kraftaufnehmerblech (12) angebracht ist.

## Claims

1. A plate-shaped permanently elastic high-temperature gasket, in particular for exhaust systems of internal combustion engines, with at least one opening (2), wherein the gasket (1) consists of a top layer (6), a bottom layer (7) and a middle layer (8) which is disposed between the two and in which a metal carrier (9) is embedded, wherein the space of the middle layer (8) which is not occupied by this carrier is filled entirely or substantially with graphite (10), ***characterised in* that** the material of the top layer (6) and the bottom layer (7) consists entirely or at least predominantly of mica.

2. A plate-shaped high-temperature gasket according to Claim 1, which comprises a circulating metallic flanged ring (5) at its outer edge (4) and/or at the outer edge of the at least one opening (2).

3. A plate-shaped high-temperature gasket according to Claim 2, in which the flanged ring (5) is provided with a radially directed flanged edge (5A, 5B) at its two axial ends.

4. A plate-shaped high-temperature gasket according to Claim 3, in which the portion (5C) of the flanged ring (5) between the two axial ends thereof extends in an arched manner in cross section.

5. A plate-shaped high-temperature gasket according to any one of Claims 1 to 4, in which the top (6) and/or the bottom layer (7) consist(s) of mica paper impregnated with binding agent.

6. A plate-shaped high-temperature gasket according to any one of Claims 1 to 5, in which a potassium-magnesium-aluminium-hydrosilicate is used as mica.

7. A plate-shaped high-temperature gasket according to Claim 5 or Claim 5 in conjunction with Claim 6, in which silicone resin is used as binding agent.

8. A plate-shaped high-temperature gasket according to any one of Claims 1 to 7, in which the top (6) and the bottom layer (7) are joined to the middle layer (8) by gluing.

9. A plate-shaped high-temperature gasket according to any one of Claims 1 to 7, in which the top (6) and the bottom layer (7) are joined to the middle layer (8) by means of the metal carrier (9) embedded in the latter.

10. A plate-shaped high-temperature gasket according to any one of Claims 1 to 9, in which the metal carrier in the middle layer (8) consists of a spiked metal sheet (9) or of a metallic braided insert.

11. A plate-shaped high-temperature gasket according to any one of Claims 1 to 10, in which a force pick-up metal sheet (12) is disposed in an externally circulating edge region (11) of the gasket (1) in the middle layer (8).

## Revendications

1. Joint à haute température en forme de plaque, durablement élastique, en particulier pour circuits de gaz d'échappement de moteurs à combustion interne, présentant au moins une ouverture (2), le joint (1) étant composé d'une couche de plafond (6), d'une couche de plancher (7) et d'une couche centrale (8) disposée entre les deux premières, et dans laquelle est incorporé un support métallique (9), l'espace de la couche centrale (8) qui n'est pas occupé par ce support étant rempli entièrement ou à peu près entièrement de graphite (10), **caractérisé en ce que** la matière de la couche de plafond (6) et de la couche de plancher (7) est composée en totalité ou du moins en majeure partie de mica.

2. Joint à haute température en forme de plaque selon la revendication 1, qui présente un anneau de bordure métallique périphérique (5) le long de son bord extérieur (4) et/ou le long du bord extérieur de l'au moins une ouverture (2).

3. Joint à haute température en forme de plaque selon la revendication 2, dans lequel l'anneau de bordure (5) est muni d'un bord de bordure (5A, 5B) dirigé radialement à ses deux extrémités axiales.

4. Joint à haute température en forme de plaque selon la revendication 3, dans lequel le segment (5c) de l'anneau de bordure (5) s'étend avec une forme bombée en section transversale entre ses deux extrémités axiales.

5. Joint à haute température en forme de plaque selon une des revendications 1 à 4, dans lequel la couche de plafond (6) et/ou la couche de plancher (7) est ou sont composée(s) de papier de mica imprégné d'un liant.

6. Joint à haute température en forme de plaque selon une des revendications 1 à 5, dans lequel on utilise comme mica un hydrosilicate de potassium-magnésium-aluminium.

7. Joint à haute température en forme de plaque selon la revendication 5, ou selon la revendication 5 en combinaison avec la revendication 6, dans lequel on utilise une résine de silicone comme liant.

8. Joint à haute température en forme de plaque selon une des revendications 1 à 7, dans lequel la couche de plafond (6) et la couche de plancher (7) sont assemblées à la couche centrale (8) par collage.

9. Joint à haute température en forme de plaque selon une des revendications 1 à 7, dans lequel la couche de plafond (6) et la couche de plancher (7) sont assemblées à la couche centrale (8) au moyen du support métallique (9) incorporé dans cette dernière.

10. Joint à haute température en forme de plaque selon une des revendications 1 à 9, dans lequel le support métallique contenu dans la couche centrale (8) est composé d'une tôle à pointes (9) ou d'une insertion de grillage métallique.

11. Joint à haute température en forme de plaque selon une des revendications 1 à 10, dans lequel une tôle d'absorption des efforts (12) est placée dans la couche centrale (8) dans une région marginale périphérique extérieure (11) du joint (1).
